# EUROPÄISCHE PATENTANMELDUNG

(11) **EP 2 146 308 A2**
(43) Veröffentlichungstag der Anmeldung: **20.01.2010**
(21) Anmeldenummer: 09162138.3
(22) Anmeldetag: 08.06.2009
(51) Int. Cl.: G06Q 10/00

(54) **Verfahren und Vorrichtung zum Überwachen des Transports eines Gepäckstücks**

(30) Priorität: 11.06.2008 DE 102008027785; 07.04.2009 DE 102009016628
(71) Anmelder: SIEMENS AKTIENGESELLSCHAFT, 80333 München (DE)
(72) Erfinder: Wilke, Wolf-Stephan, 78467 Konstanz (DE)

(57) **Zusammenfassung**

Die Erfindung betrifft ein Verfahren und eine Vorrichtung zum Überwachen des Transports eines Gepäckstücks, insbesondere eines Gepäckstücks eines Fluggasts. Zu überwachen ist ein Transportvorgang, durch den das Gepäckstück transportiert wird. Mindestens ein rechnerverfügbares Bild des Gepäckstücks wird erzeugt. Dieses Bild zeigt das Gepäckstück bei Beleuchtung mit Licht im von Menschen sichtbaren Bereich. Ein Datensatz für den Transportvorgang wird erzeugt. Dieser Datensatz umfasst das Bild von dem Gepäckstück. Der Datensatz wird in einem Datenspeicher abgespeichert. Das Gepäckstück wird zu einer Prüfeinrichtung verbracht. Mindestens einmal wird im Datenspeicher nach dem Datensatz für diesen Transportvorgang gesucht. Auf einem Anzeigegerät wird mindestens ein Bild, das von einem gefundenen Datensatz umfasst wird, dargestellt. Das mindestens eine gefundene Bild wird dergestalt auf dem Anzeigegerät dargestellt, dass eine Prüfung ermöglicht wird, ob das dargestellte Bild tatsächlich das Gepäckstück in der Nähe des Anzeigegeräts oder ein anderes Gepäckstück zeigt.

## Beschreibung

Die Erfindung betrifft ein Verfahren und eine Vorrichtung zum Überwachen des Transports eines Gepäckstücks, insbesondere eines Gepäckstücks eines Fluggasts.

Eine Vorrichtung mit den Merkmalen des Oberbegriffs des Anspruchs 1 und ein Verfahren mit den Merkmalen des Oberbegriffs des Anspruchs 11 sind aus WO 2005/086616 A2 bekannt.

In WO 2005/086616 A2 werden ein Verfahren und eine Vorrichtung beschrieben, um in einer Gepäckförderanlage z. B. in einem Flughafen eine Abfolge von Gepäckstücken gezielt zu untersuchen. Jedes Gepäckstück ist mit einer Kennung auf einem einen mobilen Datenträger in Form eines "tags" versehen. Jeweils ein Röntgenbild ("X-ray image") vom Gepäckstück wird angefertigt und auf einem Bildschirm angezeigt. Ein Kontrolleur ("Screener") prüft das Röntgenbild, um verdächtige Gegenstände im Gepäckstück zu finden. Falls der Kontrolleur einen verdächtigen Gegenstand in einem Gepäckstück gefunden hat, so macht der Kontrolleur eine entsprechende Eingabe in ein Computersystem über eine Datenverbindung. Auf einem "touch screen" markiert der Kontrolleur das Abbild vom verdächtigen Gegenstand in dem Röntgenbild.

In einer Datenbank werden eine Kennung und das Röntgenbild vom verdächtigen Gepäckstück abgelegt. Das verdächtige Gepäckstück wird auf seinem weiteren Transportweg mittels seiner Kennung, die auf dem "tag" angebracht ist, überwacht. An einer bestimmten Stelle der Gepäckförderanlage wird das Gepäckstück manuell untersucht. Auf einem Bildschirm wird das Röntgenbild dieses Gepäckstücks dargestellt, um die manuelle Suche zu unterstützen.

In WO 2007/059049 A2 wird ein mobiler Datenträger für ein Gepäckstück vorgeschlagen, der dort "luggage brander" bezeichnet wird. Dieser Datenträger wird an einem Gepäckstück befestigt und zeigt eine Kennung für das Gepäckstück, die aus größerer Entfernung lesbar ist.

In DE 202006016881 U1 wird vorgeschlagen, ein zu transportierendes Gepäckstück mit einem Foto des Eigentümers zu versehen. Dieses Foto wird z. B. in Form eines Etiketts auf das Gepäckstück geklebt.

In DE 10040550 A1 wird eine Vorrichtung beschrieben, die sowohl eine Gegenstandserkennung als auch eine Funkerkennung durchführt. Die Gegenstandserkennung wertet ein Abbild von einer Gepäckförderanlage aus und stellt fest, ob in dem Abbild ein Gepäckstück dargestellt ist. Die Funkerkennung wertet einen mobilen Datenträger in Form eines elektronischen "tags" aus, mit dem ein Gepäckstück versehen ist. Eine Verarbeitungseinrichtung wertet die Ergebnisse von beiden Erkennungen aus, um den Transport des Gepäckstücks fortzusetzen.

In DE 102006049454 A1 erzeugt eine Kamera Abbilder einer vorbestimmten Bewegungsbahn eines Gegenstands oder von einem vorbestimmten Raumsegment. Eine Bildverarbeitungsanlage prüft, ob ein abgebildeter Gegenstand zu einer vorgegebenen Gruppe von Gegenständen gehört. Ist dies der Fall, so wird ein Transponder, mit dem der Gegenstand versehen ist, ausgelesen. Dadurch wird die Gefahr verringert, dass das Leseergebnis von einem Transponder einem anderen Gegenstand zugeordnet wird als dem Gegenstand, der mit diesem Transponder versehen ist.

Vorrichtungen und Verfahren zum Überwachen von Transportvorgänen sind auch bekannt aus:
US 6158658
US 20020186862 A1
US 5299116
DE 20 2004 008 602 U1.

Der Erfindung liegt die Aufgabe zugrunde, eine Vorrichtung mit den Merkmalen des Oberbegriffs des Anspruchs 1 und ein Verfahren mit den Merkmalen des Oberbegriffs des Anspruchs 11 bereitzustellen, welche eine Überwachung auch dann ermöglichen, wenn ein mobilen Datenträger, mit dem das Gepäckstück versehen wurde, während des Transports vom Gepäckstück getrennt wird.

Die Aufgabe wird durch eine Vorrichtung mit den Merkmalen des Anspruchs 1 und ein Verfahren mit den Merkmalen des Anspruchs 11 gelöst. Vorteilhafte Ausgestaltungen sind in den Unteransprüchen angegeben.

Lösungsgemäß werden ein Verfahren und eine Vorrichtung bereitgestellt, durch die der Transport eines Gepäckstücks überwacht wird. Zu überwachen ist ein Transportvorgang, durch den das Gepäckstück transportiert wird. Dasselbe Gepäckstück kann nacheinander durch verschiedene Transportvorgänge transportiert werden, z. B. durch einen ersten Transportvorgang von einem Startflughafen zu einem Zielflughafen und durch einen zweiten Transportvorgang in entgegengesetzte Richtung.

Das Verfahren umfasst folgende Schritte:
- Mindestens ein rechnerverfügbares Bild des Gepäckstücks wird erzeugt. Dieses mindestens eine Bild des Gepäckstücks wird dergestalt erzeugt, dass es das Gepäckstück bei Beleuchtung mit Licht im von Menschen sichtbaren Bereich zeigt.
- Ein Datensatz für den Transportvorgang wird erzeugt. Dieser Datensatz umfasst das mindestens eine Bild von dem Gepäckstück.
- Der Datensatz wird in einem Datenspeicher abgespeichert.
- Das Gepäckstück wird zu einer Prüfeinrichtung verbracht.
- Mindestens einmal wird im Datenspeicher nach dem Datensatz für diesen Transportvorgang gesucht.
- Auf einem Anzeigegerät wird mindestens ein Bild, das von einem gefundenen Datensatz umfasst wird, dargestellt. Dieser Datensatz kann tatsächlich der Datensatz für den Transportvorgang sein oder ein Datensatz für einen anderen Transportvorgang.
- Das mindestens eine gefundene Bild wird dergestalt auf dem Anzeigegerät dargestellt, dass eine Prüfung ermöglicht wird, ob das auf dem Anzeigegerät dargestellte Bild tatsächlich das Gepäckstück in der Nähe des Anzeigegeräts oder ein anderes Gepäckstück zeigt.

Das Bild zeigt also das Gepäckstück im sichtbaren Bereich und nicht als Röntgenbild. Diese Ausgestaltung trägt dazu bei, dass die Prüfung ermöglicht wird, ob das Bild tatsächlich das zu untersuchende Gepäckstück in der Prüfeinrichtung oder ein anderes Gepäckstück zeigt. Müsste man das reale Gepäckstück mit einem Röntgenbild vom Gepäckstück vergleichen, so ließe sich diese Prüfung nicht zuverlässig durchführen.

Die Erfindung lässt sich dazu verwenden, nach dem Gepäckstück zu suchen. Das Gepäckstück befindet sich in einer Aufbewahrungseinrichtung für Gepäckstücke, die in dieser Ausgestaltung als Prüfeinrichtung fungiert. Für die Suche wird nach dem Datensatz für den Transportvorgang gesucht, und das Bild wird auf dem Anzeigegerät dargestellt. Vorzugsweise wird der Datensatz anhand folgender Angaben gesucht:
- der Zielort, an den das Gepäckstück zu transportieren ist, und
- eine Zeitspanne, innerhalb derer das Bild angefertigt wurde.

Diese beiden Angaben sind in der Regel bekannt, wenn nach dem Gepäckstück gesucht wird, und können daher für die Suche nach dem Datensatz verwendet werden. Falls das Gepäckstück verlorengegangen ist, so ist hingegen oft die Kennung des Transportvorgangs nicht bekannt. Diese Kennung lässt sich auch gar nicht oder nur schwer ermitteln, weil weder das Gepäckstück noch der mobile Datenträger vorliegen.

In einer Anwendung wird die Erfindung dafür benutzt, um zu entscheiden, ob das Gepäckstück während des Transports beschädigt wurde oder bereits vor Beginn des Transports beschädigt war. Die Kennung des Transportvorgangs wird hierfür ermittelt, sobald diese Entscheidung durchgeführt werden soll, z. B. nachdem der Transport abgeschlossen wurde. Der Datensatz für das Gepäckstück wird anhand dieser Transportvorgangs-Kennung ermittelt. Das mindestens eine Bild wird mit dem realen Gepäckstück, wie es zum Zeitpunkt der Entscheidung beschaffen ist, verglichen.

In dieser Anwendung wird also erst nach dem Transport im weiteren Datenspeicher nach dem Datensatz gesucht. Möglich ist auch, bereits während des Transports nach diesem Datensatz zu suchen, um den Transport zu überwachen.

In einer Ausgestaltung befinden sich das Anzeigegerät, auf dem das Bild dargestellt wird, sowie das zu untersuchende Gepäckstück selber in demselben Raum oder auf andere Weise so nahe beieinander, so dass ein Kontrolleur abwechselnd das Bild und das reale Gepäckstück betrachten kann und den Vergleich durchführen kann.

In einer anderen Ausgestaltung erzeugt eine Kamera ein Abbild von dem zu untersuchenden Gepäckstück. Dieses Abbild und das Bild aus dem Datensatz werden einander gegenübergestellt. Diese Ausgestaltung ermöglicht es, dass der Kontrolleur sich an einem anderen Ort als das Gepäckstück befindet.

In einer Ausgestaltung wird das Gepäckstück mit einem mobilen Datenträger versehen. Das Bild des Gepäckstücks erzeugt, bevor der mobile Datenträger am Gepäckstück befestigt wird. Diese Abfolge könnte leicht in einen Arbeitsablauf integriert werden.

In einer anderen Ausgestaltung wird das Bild des Gepäckstücks erzeugt, nachdem der mobile Datenträger am Gepäckstück befestigt wird. Mindestens ein Bild zeigt das Gepäckstück mit dem am Gepäckstück befestigten mobilen Datenträger. Diese Ausgestaltung erleichtert die Suche nach dem Gepäckstück, wenn das Gepäckstück während des Transports verlorengeht und damit zu rechnen ist, dass der mobile Datenträger noch mit dem Gepäckstück verbunden ist.

Vorzugsweise wird das Bild dann erzeugt, wenn das Gepäckstück ohnehin untersucht wird und daher von außen frei zugänglich ist, beispielsweise während das Gepäckstück gewogen wird oder von einem Röntgengerät durchleuchtet wird.

In einer Ausgestaltung wird der mobile Datenträger zusätzlich mit einer Kennzeichnung des Zielorts versehen, an den das Gepäckstück zu transportieren ist. Diese Kennzeichnung lässt sich von einem Menschen lesen und erleichtert den Transport, z. B. wenn das Gepäckstück während des Transports umgeladen wird.

Vorzugsweise wird eine Kennung für den Transportvorgang vorgegeben. Diese Kennung wird auf einem mobilen Datenträger abgespeichert. Der mobile Datenträger ist z. B. ein Etikett mit einem Strichmuster oder ein elektronischer Datenträger. Während des Transports wird mindestens einmal die Transportvorgangs-Kennung auf dem mobilen Datenträger gelesen. Anhand dieser Kennung wird nach dem Datensatz für das Gepäckstück gesucht. Das mindestens eine Bild des gefundenen Datensatzes wird auf dem Anzeigegerät angezeigt. Durch Vergleich des Gepäckstücks mit dem Bild lässt sich feststellen, ob der mobile Datenträger noch am richtigen Gepäckstück befestigt ist oder aber vertauscht wurde und jetzt an einem anderen Gepäckstück hängt.

In einer Ausgestaltung wird das mindestens eine Bild in einem mobilen Datenträger abgespeichert, und das Gepäckstück wird mit diesem mobilen Datenträger versehen. Im mobilen Datenträger werden weitere Angaben zum Transportvorgang abgespeichert, z. B. eine Kennung für den Transportvorgang. Bei einer Überprüfung eines Gepäckstücks wird das Bild aus dem mobilen Datenträger ausgelesen und auf einem Anzeigegerät angezeigt. Diese Ausgestaltung ermöglicht die Prüfung, ob das Gepäckstück, das jetzt untersucht ist, tatsächlich dasjenige Gepäckstück ist, das auf dem Bild im mobilen Datenträger gezeigt wird, oder ein anderes Gepäckstück. Dadurch kann eine Manipulation entdeckt werden, bei der ein Gepäckstück zunächst mit einem mobilen Datenträger versehen wurde und danach mit einem anderen mobilen Datenträger, um z. B. ein Gepäckstück an Bord eines Verkehrsmittels zu schmuggeln.

In einer Ausgestaltung ist das Anzeigegerät Bestandteil eines mobilen Geräts. Ein Werker verwendet dieses mobile Gerät mit dem Anzeigegerät, um nach einem Gepäckstück zu suchen oder um ein Gepäckstück zu untersuchen. Hierfür verwendet der Werker das Bild, das auf dem Anzeigegerät des mobilen Geräts dargestellt wird.

Im Folgenden wird die Erfindung anhand eines Ausführungsbeispiels beschrieben.

Im Ausführungsbeispiel wird die Erfindung dazu eingesetzt, den Transport von Gepäckstücken von Fluggästen zu überwachen. Die Fluggäste geben diese Gepäckstücke an einem Annahmeschalter eines Flughafens auf. Jedes Gepäckstück wird für die Dauer des Transports mit einem mobilen Datenträger versehen. Dieser mobile Datenträger ist beispielsweise
- ein "IATA baggage tag", der für die Dauer des Transports an einen Griff oder eine andere geeignete Komponente des Gepäckstücks befestigt wird, oder
- ein Aufkleber, der auf das Gepäckstück aufgeklebt wird,
- ein elektronischer Datenträger, z. B. ein RFID-Chip, der mit dem Gepäckstück wenigstens zeitweise verbunden wird und in dem Daten abgespeichert werden können.

Die "IATA Resolution 740" definiert, welche Informationen ein "IATA baggage tag" in welcher Form zu enthalten hat.

Am Annahmeschalter befindet sich eine Beschriftungseinrichtung. Diese Beschriftungseinrichtung beschriftet jeden "IATA baggage tag" bzw. jeden Aufkleber mit der jeweiligen Codierung der Gepäckstück-Kennung. Im Falle eines elektronischen Datenträgers speichert die Beschriftungseinrichtung die Codierung der Kennung im Datenträger ab. Nachdem der mobile Datenträger mit der Zielflughafen-Kennung und der Gepäckstück-Kennung versehen ist, wird der mobile Datenträger mit dem Gepäckstück verbunden.

Der mobile Datenträger wird im Ausführungsbeispiel mit folgenden Informationen versehen:
- mit einer maschinenlesbare Codierung einer Kennung des Transportvorgangs, durch den das Gepäckstück transportiert wird, und
- mit einer Kennzeichnung für den Zielflughafen, an den das Gepäckstück zu transportieren ist, sowie für die Flugnummer, durch den das Gepäckstück zu transportieren ist.

Die Kennung unterscheidet den Transportvorgang von allen anderen Transportvorgängen für Gepäckstücke, die innerhalb eines vorgegebenen Zeitraums an einem Annahmeschalter aufgegeben werden. Der Zeitraum ist beispielsweise eine Woche. Falls das Gepäckstück später durch einen weiteren Transportvorgang transportiert wird, so wird eine weitere Kennung für diesen Transportvorgang vergeben, die sich in der Regel von der ersten Kennung unterscheidet.

Bevorzugt umfasst die Kennung des Transportvorgangs eine Kennung der Beschriftungseinrichtung am Annahmeschalter. Diese Kennung unterscheidet die Beschriftungseinrichtung von allen anderen Beschriftungseinrichtungen, die irgendwo verwendet werden, ist also weltweit eindeutig. Über die Kennung der Beschriftungseinrichtung lassen sich der Annahmeschalter und damit auch derjenige Flughafen, zu dem der Annahmeschalter gehört, eindeutig identifizieren.

Falls als mobiler Datenträger ein "IATA baggage tag" oder ein Aufkleber verwendet wird, so wird als Kennzeichnung vorzugsweise ein von einem Menschen lesbares Kürzel des Zielflughafens verwendet, z. B. SXF für den Flughafen Berlin-Brandenburg International in Schönefeld bei Berlin. Das Kürzel und die Kennung des Gepäckstücks wird hingegen erst am Annahmeschalter z. B. als Strichmuster ("ID bar code") oder als Matrixcode auf den Datenträger aufgedruckt.

In einer Ausgestaltung wird ein elektronischer Datenträger, z. B. ein RFID-Chip, für die Dauer des Transports mit dem Gepäckstück verbunden. In diesen Datenträger wird die Kennung für den Transportvorgang abgespeichert. Möglich ist, zusätzlich die Kennzeichnung des Zielflughafens im elektronischen Datenträger anzuspeichern.

In einer anderen Ausgestaltung ist ein elektronischer Datenträger, z. B. ein RFID-Chip, fest in das Gepäckstück eingebaut. In diesem Datenträger ist eine eindeutige Kennung für das Gepäckstück abgespeichert, sie lässt sich nicht überschreiben. Diese Kennung unterscheidet das Gepäckstück von allen anderen Gepäckstücken, in denen ein elektronischer Datenträger eingebaut ist.

Um die Kennung für den Transportvorgang zu erzeugen, wird vorzugsweise diese Gepäckstück-Kennung am Annahmeschalter ausgelesen. Die Kennung für den Transportvorgang wird unter Verwendung folgender Informationen erzeugt:
- der ausgelesenen Gepäckstück-Kennung,
- der Kennung für die Beschriftungseinrichtung und
- einer Kennzeichnung für den Zeitpunkt, an dem das Gepäckstück aufgegeben wurde.

Für die Dauer des Transports wird das Gepäckstück zusätzlich mit einem "IATA baggage tag" oder einem Aufkleber versehen, der so wie oben beschrieben mit einer Kennung für den Transportvorgang versehen ist. Dieser mobile Datenträger ermöglicht eine Identifizierung und einen Transport des Gepäckstücks auch dann, wenn sich der fest eingebaute Datenträger nicht auslesen lässt, beispielsweise weil er beschädigt ist.

Diese drei Informationen unterscheiden diesen Transportvorgang von allen anderen Transportvorgängen, durch die ein Gepäckstück mit eingebautem elektronischem Datenträger transportiert wird.

Die Beschriftungseinrichtung ist mit einer Datenverarbeitungsanlage verbunden. Diese Datenverarbeitungsanlage besitzt eine Recheneinheit sowie eine zentrale Datenbank oder sonstiges Datenhaltungssystem. Dieses zentrale Datenhaltungssystem fungiert als der weitere Datenspeicher. Die Recheneinheit ist vorzugsweise ebenfalls am Annahmeschalter vorhanden. Das zentrale Datenhaltungssystem ist bevorzugt mit mehreren Recheneinheiten an verschiedenen Annahmeschaltern verbunden und befindet sich in einer Zentrale.

Die Recheneinheit generiert die Kennungen für die Transportvorgänge, z. B. bestehend aus einer vorgegebenen Kennung, die die Beschriftungseinrichtung von allen anderen Beschriftungseinrichtungen unterscheidet, sowie einer laufenden Nummer für dieses Gepäckstück. Die generierte Kennung für den Transportvorgang wird einerseits an die Beschriftungseinrichtung übermittelt, die so wie oben beschrieben den mobilen Datenträger mit dieser Kennung versieht.

Andererseits wird ein Datensatz für den Transportvorgang in dem zentralen Datenhaltungssystem generiert, beispielsweise ebenfalls von der Recheneinheit. Dieser Datensatz umfasst die Kennung für den Transportvorgang. Über diese Kennung sind also der Transportvorgang und damit das Gepäckstück mit dem zentralen Datensatz verbunden.

Falls das Gepäckstück eine eindeutige Kennung besitzt, die beispielsweise in einem mobilen Datenträger abgespeichert ist und die so wie oben beschrieben am Annahmeschalter ausgelesen wurde, so umfasst der Datensatz für den Transportvorgang bevorzugt zusätzlich diese Gepäckstück-Kennung.

Bevorzugt identifiziert sich der Fluggast, der dieses Gepäckstück aufgibt, am Annahmeschalter, z. B. mittels eines Ausweises oder einer Chipkarte. Der Fluggast wurde bereits bei der Bestellung der Flugreise registriert. Im Datensatz für das Gepäckstück wird eine Kennung für den Fluggast hinterlegt. Beispielsweise wird ein Datensatz für den Fluggast angelegt, und der Datensatz für den Transportvorgang umfasst einen Verweis auf den Datensatz dieses Fluggasts.

Bevorzugt wird der Datensatz weiterhin um eine Kennzeichnung des Zeitpunkts ergänzt, an dem der Fluggast das Gepäckstück am Annahmeschalter übergeben hat.

Im Ausführungsbeispiel werden von jedem Gepäckstück jeweils mehrere Bilder angefertigt, nachdem das Gepäckstück mit dem mobilen Datenträger verbunden ist und bevor das Gepäckstück in das Flugzeug zum Zielflughafen verladen wird. Die Bilder werden von einem Bildaufnahmegerät angefertigt, beispielsweise von einer Anordnung von mehreren Digitalkameras. Diese Anordnung ist so angeordnet, dass die Digitalkameras Bilder vom Gepäckstück aus verschiedenen Aufnahmerichtungen anzufertigen vermögen. Die Bilder zeigen das Gepäckstück also aus verschiedenen Richtungen. Mindestens ein Bild zeigt das Gepäckstück mit dem mobilen Datenträgern. Möglich ist, dass auf einem anderen Bild der mobile Datenträger vom Gepäckstück verdeckt wird. Die Bilder zeigen das Gepäckstück bei Beleuchtung mit Licht im von Menschen sichtbaren Bereich. Entweder wird ohnehin vorhandenes Tageslicht oder künstliches Licht verwendet. Oder das Gepäckstück wird beleuchtet.

In einer Ausgestaltung werden die Bilder erzeugt, während das Gepäckstück gewogen wird. Zum Wiegen wird das Gepäckstück ohnehin verlangsamt, so dass eine Aufnahme leicht möglich ist. In einer anderen Ausgestaltung werden die Bilder dann erzeugt, wenn das Gepäckstück daraufhin untersucht wird, ob es gefährliche Gegenstände enthält, beispielsweise Sprengstoffe oder Schusswaffen. Um diese Untersuchung durchzuführen, wird es durchleuchtet, z. B. geröntgt. Möglich ist, dass an verschiedenen Bearbeitungsstationen jeweils ein Bild angefertigt wird. Die Bilder, die für das lösungsgemäße Verfahren verwendet werden, sind aber nicht die Röntgenbilder, sondern werden in einer Ausgestaltung gleichzeitig mit den Röntgenbildern erzeugt.

Bei Bedarf wird das Gepäckstück beleuchtet, während die Bilder angefertigt werden, damit das Gepäckstück auf den Bildern gut erkennbar ist.

Die Kennung des Transportvorgangs wird ausgelesen, beispielsweise indem das Strichmuster mit der Kennung gelesen und ausgewertet wird. Die Kennung und die Bilder vom Gepäckstück werden an die Recheneinheit und von dieser an das zentrale Datenhaltungssystem übermittelt. Im zentralen Datenhaltungssystem wird der Datensatz mit dieser Kennung ermittelt. Der dergestalt im zentralen Datenhaltungssystem gefundene Datensatz ist der Datensatz für den Transportvorgang. Der gefundene Datensatz wird um diejenigen Bilder ergänzt, die vom Gepäckstück angefertigt werden.

Der Datensatz für den Transportvorgang umfasst nunmehr folgende Informationen:
- die Kennung für den Transportvorgang,
- u. U. die ausgelesene Kennung für das Gepäckstück,
- eine Kennung für denjenigen Fluggast, der das Gepäckstück aufgegeben hat,
- eine Kennzeichnung des Annahmeschalters und des Zeitpunkts, an dem das Gepäckstück aufgegeben wurde, sowie
- die Bilder des Gepäckstücks mit dem mobilen Datenträger.

Das Gepäckstück wird anschließend in einen fahrbaren Behälter verladen, und dieser fahrbare Behälter wird zu einem Flugzeug gefahren. Alle Gepäckstücke im fahrbaren Behälter werden in das Flugzeug verladen und werden im Flugzeug zu einem Zielflughafen transportiert.

Vorzugsweise findet eine Sicherheitsüberprüfung statt, bevor ein Gepäckstück in diesen fahrbaren Behälter transportiert wird. Bei dieser Sicherheitsüberprüfung wird die Kennung auf dem mobilen Datenträger gelesen. Eine Bedienkraft trägt ein tragbares Lesegerät, z. B. ein Strichmusterlesegerät ("bar code scanner"). Mit diesem Lesegerät liest die Bedienkraft das Strichmuster auf dem mobilen Datenträger. Falls das Gepäckstück mit einem RFID-Chip verbunden ist, so verwendet die Bedienkraft ein RFID-Lesegerät.

Die gelesene Transportvorgangs-Kennung wird an die Recheneinheit übermittelt. Durch Lesezugriff auf das zentrale Datenhaltungssystem ermittelt die Recheneinheit den Datensatz für den Transportvorgang. Durch Auswertung dieses Datensatzes wird ermittelt, welcher Fluggast dieses Gepäckstück aufgegeben hat. Geprüft wird, ob dieser Fluggast bereits in das Flugzeug eingestiegen ist. Falls nicht, so wird das Gepäckstück nicht in den Behälter verladen, sondern zurückgehalten. Dadurch wird vermieden, dass das Gepäckstück ohne den Fluggast im Flugzeug transportiert wird. Zum einen kann es sein, dass der Fluggast zu spät die Kontrolle passiert hat und das Flugzeug nicht mehr erreicht und dann das Gepäckstück zurück erhalten möchte. Zum anderen kann es passieren, dass jemand versucht, ein Gepäckstück z. B. mit Sprengstoff an Bord zu schmuggeln, ohne sich selber an Bord des Flugzeugs zu begeben.

Im Ausführungsbeispiel wird die Gefahr reduziert, dass ein Verbrecher diese Sicherheitsprüfung durch folgendes Vorgehen umgeht: Der Verbrecher gibt als vermeintlicher Fluggast ein Gepäckstück am Annahmeschalter auf und versieht anschließend sein Gepäckstück mit einem mobilen Datenträger eines anderen Gepäckstücks. Dieses andere Gepäckstück gehört zu einem Fluggast, der tatsächlich mit dem Flugzeug fliegen will. Das Gepäckstück dieses Fluggasts versieht der Verbrecher z. B. mit dem mobilen Datenträger seines eigenen Gepäckstücks, damit das Vertauschen nicht durch bloßes Abzählen entdeckt wird. Das Gepäckstück des Verbrechers ist dann mit dem mobilen Datenträger eines Fluggasts verbunden, der sich tatsächlich an Bord befindet.

Im Ausführungsbeispiel ist die Bedienkraft mit einem Lesegerät versehen, welches zusätzlich einen Bildschirm besitzt und daher zusätzlich als mobiles Anzeigegerät fungiert. Wie bereits dargelegt, wird anhand der gelesenen Kennung des Transportvorgangs der Datensatz für das Transportvorgang ermittelt. An dieses Lesegerät werden die Bilder übermittelt, die vom Gepäckstück angefertigt wurden und die Bestandteil des gefundenen Datensatzes sind. Das Lesegerät zeigt die Bilder auf dem Bildschirm an, und zwar vorzugsweise nacheinander. Die Bedienkraft vergleicht die Bilder vom Gepäckstück, die auf dem Bildschirm angezeigt werden, mit dem realen Gepäckstück. Falls mindestens ein Bild ein anderes Gepäckstück zeigt als dasjenige, welches die Bedienkraft gerade untersucht, so besteht der Verdacht einer Manipulation, und eine eingehende Untersuchung wird eingeleitet.

Möglich ist, zusätzlich eine Sicherung für den Fall vorzusehen, dass eine Datenverbindung zwischen dem Lesegerät und dem zentralen Datenhaltungssystem nicht hergestellt werden kann oder gar kein Datensatz gefunden wird. Weiterhin könnte es passieren, dass die falsche Kennung gelesen oder ein falscher Datensatz ermittelt wird. Daher wird in einer Ausgestaltung zusätzlich im mobilen Datenträger mindestens eines der Bilder des Gepäckstücks abgespeichert. Im Falle eines RFID-Chips liest die Bedienkraft dieses Bild aus, und das Lesegerät stellt das Bild auf dem Anzeigegerät dar. Oder das Bild wird beispielsweise auf den Aufkleber oder den "IATA baggage tag" aufgedruckt.

Falls das Gepäckstück hingegen die gerade beschriebene Sicherheitsüberprüfung bestanden hat, wird es in ein Flugzeug verladen und zu einem Zielflughafen transportiert. Bekanntlich kann es vorkommen, dass das Gepäckstück zu spät zum richtigen Zielflughafen oder aber zu einem falschen Flughafen transportiert wird und der Fluggast sein Gepäckstück nicht wie geplant am Zielflughafen abholen kann. In diesem Fall erleichtert das Verfahren gemäß dem Ausführungsbeispiel die Suche nach dem Gepäckstück.

Zunächst wird die Kennung des Transportvorgangs ermittelt. Falls diese Kennung nicht bekannt ist, wird der Datensatz für das Gepäckstück anhand anderer Informationen ermittelt. Für die Suche werden die Angaben über den Fluggast, den Annahmeschalter sowie eine Zeitspanne, in der das Gepäckstück an diesem Annahmeschalter aufgegeben wurde, vorgegeben. Falls vorhanden, wird zusätzlich die Kennung des gesuchten Gepäckstücks vorgegeben. Diese Informationen sind in der Regel bekannt. Gesucht wird nach allen Datensätzen in dem zentralen Datenhaltungssystem, die zu diesen Vorgaben passen. In der Regel bleibt nur ein Datensatz übrig. Falls nicht, wird der richtige Datensatz anhand weiterer Angaben ermittelt, z. B. den Bildern.

Ist der richtige Datensatz gefunden, so liefert dieser Datensatz die Bilder für das gesuchte Gepäckstück. Diese Bilder werden an die Recheneinheit derjenigen Ausgabeeinrichtung übermittelt, an dem nach dem Gepäckstück gesucht wird. Die Recheneinheit übermittelt die Bilder weiter an Ausgabegeräte mit Bildschirmen, auf denen die Bilder dargestellt werden, z. B. mobile Ausgabegeräte. Die Bilder erleichtern es Bedienkräften, an der Ausgabeeinrichtung nach dem Gepäckstück zu suchen. Diese Ausgestaltung erfordert es nicht, dass der mobile Datenträger noch mit dem Gepäckstück verbunden ist.

Weiterhin ist es nicht erforderlich, dass an jedem Gepäckstück ein mobiler Datenträger ausgelesen wird, um dessen Kennung für einen Transportvorgang oder ein Gepäckstück zu ermitteln und dann zu entscheiden, ob dieses Gepäckstück das gesuchte Gepäckstück ist. Dieses Vorgehen ist zeitaufwendig. Dank der Erfindung wird vielmehr zunächst eine Vorauswahl unter Gepäckstücken vorgenommen. Anhand der übermittelten Bilder des gesuchten Gepäckstücks werden solche Gepäckstücke gefunden, die dem gesuchten Gepäckstück ähnlich sind. Unter den dergestalt vorausgewählten Gepäckstücken wird dann das gesuchte Gepäckstück anhand der Kennung identifiziert.

Im Ausführungsbeispiel wird die Erfindung zusätzlich dazu angewendet, um während oder nach dem Transport zu entscheiden, ob das Gepäckstück noch im gleichen Zustand ist wie zu dem Zeitpunkt, als es am Annahmeschalter aufgegeben wurde, oder ob es während des bisherigen Transports beschädigt wurde. Beispielsweise reklamiert ein Fluggast, dass sein Koffer während des Flugs beschädigt worden sei. So wie gerade beschrieben wird zunächst die Kennung des Transportvorgangs ermittelt, durch den das reklamierte Gepäckstück transportiert wurde - entweder durch Auslesen des mobilen Datenträgers oder durch eine Suche nach dem Datensatz. Anschließend wird der Datensatz für den Transportvorgang ermittelt, und die Bilder vom Gepäckstück, die im Datensatz enthalten sind, werden an ein Anzeigegerät übermittelt und auf einem Bildschirm dargestellt. Durch Vergleich der Bilder mit dem realen Gepäckstück lässt sich entscheiden, ob das Gepäckstück schon zum Zeitpunkt, als die Bilder erzeugt wurden, beschädigt war oder tatsächlich erst während des Transports beschädigt wurde.

## Patentansprüche

1. Verfahren zum Überwachen eines Transportvorgangs, durch den ein Gepäckstück transportiert wird,
welches die Schritte umfasst, dass
- mindestens ein rechnerverfügbares Bild des Gepäckstücks erzeugt wird,
- ein Datensatz für den Transportvorgang erzeugt wird, der das mindestens eine Bild umfasst,
- der Datensatz in einem Datenspeicher abgespeichert wird,
- das Gepäckstück zu einer Prüfeinrichtung verbracht wird,
- mindestens einmal im Datenspeicher nach dem Datensatz für den Transportvorgang gesucht wird,
- mindestens ein Bild, das von einem gefundenen Datensatz umfasst wird, auf einem Anzeigegerät dargestellt wird und
**dadurch gekennzeichnet, dass**
- das mindestens eine Bild des Gepäckstücks dergestalt erzeugt wird, dass es das Gepäckstück bei Beleuchtung mit Licht im von Menschen sichtbaren Bereich zeigt, und
- das Bild im gefundenen Datensatz dergestalt auf dem Anzeigegerät dargestellt wird,
dass eine Prüfung ermöglicht wird,
ob das auf dem Anzeigegerät dargestellte Bild tatsächlich das Gepäckstück in der Prüfeinrichtung oder ein anderes Gepäckstück zeigt.

2. Verfahren nach Anspruch 1,
**dadurch gekennzeichnet, dass**
- ein mobiler Datenträger wenigstens zeitweise mit dem Gepäckstück verbunden wird und
- das mindestens eine Bild des Gepäckstücks dergestalt erzeugt wird,
dass es das Gepäckstück zeigt, an dem der mobilen Datenträger befestigt ist.

3. Verfahren nach Anspruch 1 oder Anspruch 2,
**dadurch gekennzeichnet, dass**
das Bild des Gepäckstücks erzeugt wird,
während gemessen wird, welchen Wert ein vorgegebenes physikalisches Merkmal für das Gepäckstück annimmt.

4. Verfahren nach einem der Ansprüche 1 bis 3,
**dadurch gekennzeichnet, dass**
der Datensatz für das Gepäckstück um
- eine Codierung des Zielorts, an den das Gepäckstück zu transportieren ist, und
- um eine Codierung des Zeitpunkts, an dem das mindestens eine Bild erzeugt wurde,
ergänzt wird,
bei der Suche ein Zielort und eine Zeitspanne vorgegeben werden und
mit den Zielort-Codierungen und Zeitpunkt-Codierungen der abgespeicherten Datensätze verglichen werden.

5. Verfahren nach einem der Ansprüche 1 bis 4,
**dadurch gekennzeichnet, dass**
- ein mobiler mobile Datenträger wenigstens zeitweise mit dem Gepäckstück verbunden wird,
- der mobile Datenträger als derjenige Datenträger verwendet wird, in dem das mindestens eine Bild des Gepäckstücks abgespeichert wird, und
- mindestens einmal während des Transports das Bild aus dem mobilen Datenträger ausgelesen und auf dem Anzeigegerät dargestellt wird.

6. Verfahren nach Anspruch 5,
**dadurch gekennzeichnet, dass**
der mobile Datenträger zusätzlich mit einer Kennzeichnung des vorgegebenen Zielorts, an den das Gepäckstück zu transportieren ist, versehen wird.

7. Verfahren nach einem der Ansprüche 1 bis 6,
**dadurch gekennzeichnet, dass**
von mindestens einem Gepäckstück mindestens zwei rechnerverfügbare Bilder aus zwei verschiedenen Aufnahmerichtungen angefertigt werden und
der Datensatz für das Gepäckstück diese mindestens zwei Bilder des Gepäckstücks umfasst.

8. Verfahren nach einem der Ansprüche 1 bis 7,
**dadurch gekennzeichnet, dass**
- eine Kennung für den Transportvorgang erzeugt wird,
- der erzeugte Datensatz dergestalt erzeugt wird, dass er zusätzlich diese Kennung umfasst und
- für die Suche nach dem Datensatz diese Kennung vorgegeben wird.

9. Verfahren nach einem der Ansprüche 1 bis 8,
**dadurch gekennzeichnet, dass**
das Anzeigegerät Bestandteil eines mobilen Geräts ist und das mobile Gerät mit dem Anzeigegerät zu der Prüfeinrichtung verbracht wird.

10. Verfahren nach einem der Ansprüche 1 bis 8,
**dadurch gekennzeichnet, dass**
ein Bild von dem Gepäckstück in der Prüfeinrichtung erzeugt wird und
- sowohl das Bild im Datensatz
- als auch das Bild von dem Gepäckstück in der Prüfeinrichtung
auf dem Anzeigegerät dargestellt werden.

11. Vorrichtung zum Überwachen eines Transportvorgangs, durch den ein Gepäckstück transportiert wird,
wobei die Vorrichtung
- eine Datenverarbeitungsanlage,
- einen Datenspeicher,
- ein Bildaufnahmegerät und
- ein Anzeigegerät
umfasst,
das Bildaufnahmegerät dazu ausgestaltet ist, mindestens ein rechnerverfügbares Bild eines Gepäckstücks zu erzeugen,
das Anzeigegerät dazu ausgestaltet ist, ein Bild eines Gepäckstücks darzustellen, und
die Datenverarbeitungsanlage dazu ausgestaltet ist,
- einen Datensatz für den Transportvorgang zu erzeugen, der das mindestens eine Bild umfasst,
- diesen Datensatz in dem Datenspeicher abzuspeichern,
- mindestens einmal im Datenspeicher nach dem Datensatz für den Transportvorgang zu suchen und
- mindestens ein Bild, das von einem gefundenen Datensatz umfasst wird, an das Anzeigegerät zu übermitteln und das Anzeigegerät dergestalt anzusteuern, dass das Anzeigegerät das übermittelte Bild anzeigt,
- das Bild, das vom gefundenen Datensatz umfasst wird, auf dem Anzeigegerät darzustellen und
**dadurch gekennzeichnet, dass**
das Bildaufnahmegerät dazu ausgestaltet ist, das mindestens eine Bild des Gepäckstücks dergestalt zu erzeugen, dass es das Gepäckstück bei Beleuchtung mit Licht im von Menschen sichtbaren Bereich zeigt, und
die Vorrichtung dazu ausgestaltet ist, das Bild im gefundenen Datensatz dergestalt auf dem Anzeigegerät darzustellen,
dass eine Prüfung ermöglicht wird,
ob das dargestellte Bild tatsächlich dieses Gepäckstück oder ein anderes Gepäckstück zeigt

12. Vorrichtung nach Anspruch 11,
**dadurch gekennzeichnet, dass**
der Datenträger als mobiler Datenträger ausgestaltet ist,
die Datenverarbeitungsanlage dazu ausgestaltet ist, das mindestens eine Bild in dem mobilen Datenträger abzuspeichern, und
der mobile Datenträger mit demjenigen Gepäckstück wenigstens zeitweise verbunden ist oder verbindbar ist, welches das Bild in dem im mobilen Datenträger abgespeicherten Datensatz zeigt.

13. Vorrichtung nach Anspruch 11,
**dadurch gekennzeichnet, dass**
das Anzeigegerät Bestandteil eines mobilen Geräts ist.

14. Vorrichtung nach Anspruch 11,
**dadurch gekennzeichnet, dass**
das Bildaufnahmegerät dazu ausgestaltet ist,
ein Bild zu erzeugen, welches das Gepäckstück mit einem am Gepäckstück befestigten mobilen Datenträger zeigt.
